# EUROPEAN PATENT APPLICATION

(11) **EP 3 951 989 A1**
(43) Date of publication of application: **09.02.2022**
(21) Application number: 20885006.5
(22) Date of filing: 04.11.2020
(51) Int. Cl.: H01M 10/0567, H01M 10/052

(54) **NON-AQUEOUS ELECTROLYTE SOLUTION FOR LITHIUM SECONDARY BATTERY AND LITHIUM SECONDARY BATTERY COMPRISING SAME**

(30) Priority: 07.11.2019 KR 20190141680; 03.11.2020 KR 20200145192
(71) Applicant: LG ENERGY SOLUTION, LTD., Seoul 07335 (KR)
(72) Inventor: LEE, Jung Min, Daejeon 34122 (KR); LIM, Young Min, Daejeon 34122 (KR); YEOM, Chul Eun, Daejeon 34122 (KR); LEE, Chul Haeng, Daejeon 34122 (KR)
(74) Representative: Hoffmann Eitle
(86) International application number: PCT/KR2020/015296
(87) International publication number: WO 2021/091215

(57) **Abstract**

The present invention relates to a non-aqueous electrolyte solution for a lithium secondary battery and a lithium secondary battery including the same, and particularly, to a non-aqueous electrolyte solution for a lithium secondary battery, which includes a lithium salt, an organic solvent, and an additive, wherein the additive includes 1,4-dicyano-2-butene (DCB) and a compound represented by Formula 1, and a lithium secondary battery including the same.

## Description

### TECHNICAL FIELD

### Cross-reference to Related Applications

This application claims priority from Korean Patent Application Nos. 2019-0141680, filed on November 7, 2019, and 2020-0145192, filed on November 3, 2020, the disclosures of which are incorporated by reference herein.

### Technical Field

The present invention relates to a non-aqueous electrolyte solution for a lithium secondary battery which includes an additive capable of forming a robust film on a surface of a positive electrode, and a lithium secondary battery including the same.

### BACKGROUND ART

There is a need to develop technology for efficiently storing and utilizing electrical energy as personal IT devices and computer networks are developed with the recent development of information society and the accompanying dependency of society as a whole on the electrical energy is increased.

Particularly, studies of electricity storage devices, such as electric double-layer capacitors and non-aqueous electrolyte solution secondary batteries represented by lithium ion batteries, have been extensively conducted as an interest in solving environmental problems and realizing a sustainable circular society emerges.

Among them, since the lithium ion batteries may be miniaturized to be applicable to a personal IT device in comparison to a lead battery or nickel-cadmium battery, have high energy density and operating voltage, and may achieve high capacity, the lithium ion batteries have been used in electric vehicles and power storage devices as well as power sources of notebook computers and mobile phones.

A surface structure of a positive electrode collapses due to a side reaction between a non-aqueous electrolyte solution and the positive electrode while a film formed on a surface of the electrode degrades when the secondary battery is operated under high-voltage and high-temperature conditions, and, as a result, since a side reaction between the non-aqueous electrolyte solution and the surface of the positive electrode occurs, transition metal ions may be dissolved into the non-aqueous electrolyte solution or gas may be generated.

This phenomenon is intensified when the voltage increases or the storage temperature increases, and, as a result, battery swelling increases and cycle degradation occurs.

### DISCLOSURE OF THE INVENTION

### TECHNICAL PROBLEM

An aspect of the present invention provides a non-aqueous electrolyte solution for a lithium secondary battery which includes two types of nitrile-based compounds having a specific structure capable of forming a robust film on a surface of a positive electrode as an additive.

Another aspect of the present invention provides a lithium secondary battery in which cell swelling during high-temperature storage is low and capacity characteristics are improved by including the non-aqueous electrolyte solution for a lithium secondary battery.

### TECHNICAL SOLUTION

According to an aspect of the present invention, there is provided a non-aqueous electrolyte solution for a lithium secondary battery which includes:
a lithium salt, an organic solvent, and an additive,
wherein the additive includes 1,4-dicyano-2-butene (DCB) and a compound represented by Formula 1.

   [Formula 1] N≡C-R-Si(R₁)(R₂)-R₃

   wherein, in Formula 1,
   R is a substituted or unsubstituted alkylene group having 1 to 10 carbon atoms, and
   R₁, R₂, and R₃ are each independently a halogen atom or a substituted or unsubstituted alkyl group having 1 to 5 carbon atoms.

According to another aspect of the present invention, there is provided a lithium secondary battery including:
a positive electrode including a positive electrode active material;
a negative electrode including a negative electrode active material;
a separator disposed between the negative electrode and the positive electrode; and
the non-aqueous electrolyte solution of the present invention.

### ADVANTAGEOUS EFFECTS

1,4-dicyano-2-butene (DCB) and a compound represented by Formula 1, which are included in a non-aqueous electrolyte solution of the present invention, are compounds containing a nitrile (-CN) group in their structures, wherein they may form a robust film on a surface of a positive electrode by strong binding with transition metal. Accordingly, an electrolyte solution decomposition reaction due to a side reaction between the positive electrode and the electrolyte solution may be suppressed, collapse of the positive electrode by HF may be prevented, and dissolution of the transition metal may be effectively suppressed. Thus, if the non-aqueous electrolyte solution of the present invention including the 1,4-dicyano-2-butene (DCB) and the compound represented by Formula 1 is used, a lithium secondary battery, in which cell swelling is suppressed in a high-voltage atmosphere or during high-temperature storage and capacity characteristics are improved, may be achieved.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

With respect to a lithium ion battery, a film having passivation ability is formed on surfaces of a negative electrode and a positive electrode, while a non-aqueous electrolyte solution is decomposed during initial charge and discharge, to improve high-temperature storage characteristics. However, if the film degrades during high-voltage and high-temperature storage, since metallic elements are lost due to dissolution of transition metal ions from the positive electrode, discharge capacity decreases. Also, since the transition metal ions thus dissolved are not only electrodeposited on the negative electrode reacting in a strong reduction potential range to consume electrons, but also destruct a solid electrolyte interphase (SEI) on the surface of the negative electrode to expose the surface of the negative electrode, an additional electrolyte decomposition reaction is caused. As a result, capacity of a cell may be continuously reduced while irreversible capacity is increased.

Thus, the present invention aims at providing a non-aqueous electrolyte solution for a secondary battery which includes a non-aqueous electrolyte solution additive capable of preventing the dissolution of transition metals by the formation of a stable film on the surface of the positive electrode and reducing an amount of metallic impurities in the battery by suppressing a side reaction between the positive electrode and the electrolyte solution. Also, the present invention aims at providing a lithium secondary battery in which capacity characteristics are improved and cell swelling during high-temperature storage is suppressed by including the non-aqueous electrolyte solution.

### Non-aqueous Electrolyte Solution for Lithium Secondary Battery

First, a non-aqueous electrolyte solution for a lithium secondary battery according to the present invention will be described.

The non-aqueous electrolyte solution for a lithium secondary battery of the present invention includes:
a lithium salt, an organic solvent, and an additive,
wherein the additive includes 1,4-dicyano-2-butene (DCB) and a compound represented by Formula 1 below.

   [Formula 1] N≡C-R-Si(R₁)(R₂)-R₃

In Formula 1,
R is a substituted or unsubstituted alkylene group having 1 to 10 carbon atoms, and
R₁, R₂, and R₃ are each independently a halogen atom or a substituted or unsubstituted alkyl group having 1 to 5 carbon atoms.

### (1) Lithium Salt

Any lithium salt typically used in an electrolyte solution for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻as an anion.

Specifically, the lithium salt may include a single material selected from the group consisting of LiCl, LiBr, LiI, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiFSI (lithium bis(fluorosulfonyl)imide, LiN(SO₂F)₂), LiBETI (lithium bis (perfluoroethanesulfonyl) imide, LiN(SO₂CF₂CF₃)₂), and LiTFSI (lithium bis(trifluoromethanesulfonyl)imide, LiN(SO₂CF₃)₂), or a mixture of two or more thereof. In addition to them, any lithium salt commonly used in an electrolyte solution of a lithium secondary battery may be used without limitation.

The lithium salt may be appropriately changed in a normally usable range, but may be included in a concentration of 0.8 M to 3.0 M, for example, 1.0 M to 3.0 M in the electrolyte solution to obtain an optimum effect of forming a film for preventing corrosion of a surface of an electrode.

If the concentration of the lithium salt is less than 0.8 M, mobility of lithium ions may be reduced to degrade capacity characteristics. If the concentration of the lithium salt is greater than 3.0 M, electrolyte impregnability may be reduced due to an excessive increase in viscosity of the non-aqueous electrolyte solution, and a film-forming effect may be reduced.

### (2) Organic Solvent

The organic solvent may include a cyclic carbonate-based organic solvent and a linear ester organic solvent.

The cyclic carbonate-based organic solvent is an organic solvent which may well dissociate a lithium salt in an electrolyte due to high permittivity as a highly viscous organic solvent. Specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include at least one of ethylene carbonate and propylene carbonate (PC).

Also, in order to prepare an electrolyte solution having high ionic conductivity in the present invention, it is desirable to use a mixture of a linear ester-based organic solvent having a low melting point and high stability at high temperature and the cyclic carbonate-based organic solvent.

The linear ester-based organic solvent may include at least one of alkyl acetate or alkyl propionate.

The alkyl acetate may include at least one selected from methyl acetate, ethyl acetate, and propyl acetate. Also, the alkyl propionate may include at least one selected from the group consisting of methyl propionate, ethyl propionate, propyl propionate, and butyl propionate. Specifically, in the present invention, alkyl propionate having better thermal stability at high temperature due to a relatively higher boiling point than alkyl acetate may be included as the linear ester-based organic solvent.

The organic solvent of the present invention may include the cyclic carbonate organic solvent and the linear ester organic solvent in a volume ratio of 2:8 to 4:6, for example, 3:7 to 4:6.

The volume ratio of the cyclic carbonate organic solvent to the linear ester organic solvent may have a significant effect on improving both capacity and cycle characteristics at high temperature and room temperature during the preparation of the secondary battery, and, in a case in which the volume ratio of the cyclic carbonate organic solvent to the linear ester organic solvent satisfies the above range, a synergistic effect due to the mixed use of the two organic solvents may be achieved.

For example, in a case in which the cyclic carbonate organic solvent and the linear ester organic solvent are included within the above range, high-temperature storage stability may be improved by suppressing gas generation and cell swelling at a high voltage of 4.45 V or more and during storage at a high temperature of 60°C or more, and simultaneously, the cycle characteristics and the capacity characteristics may be sufficiently improved by securing high ionic conductivity of the electrolyte solution.

In a case in which the volume ratio of the cyclic carbonate organic solvent to the linear ester organic solvent is less than 2, that is, if the volume ratio of the linear ester organic solvent is greater than 8, a degree of dissociation of the lithium salt is decreased to reduce the ionic conductivity, and safety of the cell may be reduced because a stable passivation SEI is difficult to be formed.

Since the cyclic carbonate organic solvent is sensitive to the side reaction due to high reactivity at high voltage, gas generation is increased when an excessive amount of the cyclic carbonate organic solvent is used as a non-aqueous solvent when used in a high-voltage battery, and thus, the cell swelling is increased and the high-temperature storage stability may be decreased. Thus, if the volume ratio of the cyclic carbonate organic solvent to the linear ester organic solvent is greater than 4, that is, in a case in which the volume ratio of the linear ester organic solvent is less than 6, electrolyte wetting may be reduced due to an increase in viscosity of the electrolyte, and an oxidation reaction of the carbonate-based organic solvent may be increased to decrease cell stability at high voltage and swelling inhibition performance.

In order to increase an electrolyte solution impregnation effect in the present invention, at least one organic solvent selected from the group consisting of a linear carbonate-based organic solvent having low viscosity and low permittivity and a cyclic ester-based organic solvent may be additionally included, if necessary.

Typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

Also, the cyclic ester-based organic solvent may include at least one organic solvent selected from the group consisting of γ-butyrolactone, γ-valerolactone, γ-caprolactone, σ-valerolactone, and ε-caprolactone.

### (3) Additive

The non-aqueous electrolyte solution for a lithium secondary battery of the present invention includes two types of nitrile-based compounds as an additive.

The two types of the nitrile-based compounds may include 1,4-dicyano-2-butene (DCB) and a compound represented by Formula 1 below.

[Formula 1] N≡C-R-Si(R₁)(R₂)-R₃

In Formula 1,
R is a substituted or unsubstituted alkylene group having 1 to 10 carbon atoms, and
R₁, R₂, and R₃ are each independently a halogen atom or a substituted or unsubstituted alkyl group having 1 to 5 carbon atoms.

The 1,4-dicyano-2-butene (DCB) and the compound represented by Formula 1 are compounds containing a polar nitrile group (-CN), wherein they have very high binding affinity with ions of transition metals, such as cobalt (Co), manganese (Mn), or nickel (Ni), dissolved from the positive electrode due to a repeated charge and discharge process of the battery or chemical dissolution reaction of the electrolyte solution.

Specifically, since the 1,4-dicyano-2-butene (DCB) contains at least one polar nitrile group having a high dipole moment at both ends and further simultaneously contains a double bond in the middle of its structure in comparison to succinonitrile or adiponitrile, as a conventional nitrile-based additive, a mono-dendate structure, instead of a bi-dendate structure, is formed when bonded to metal ions in comparison to other compounds containing only one nitrile group due to stiffness of the corresponding part. Thus, since the 1,4-dicyano-2-butene (DCB) has physical properties in which bonding with the dissolved metal ions is not only very easy, but a binding force with the metal ions itself is also very high, it may form a very stable ion conductive film while forming a complex structure or ligand due to strong binding with the metal ions on the surface of the positive electrode. As a result, a side reaction between the electrolyte and the positive electrode may be prevented, and an effect of suppressing gas generation and metal ion dissolution may be achieved.

Furthermore, in addition to the metal ion adsorption effect as described above, since an unshared electron pair of nitrogen (N) in the 1,4-dicyano-2-butene (DCB) stabilizes the anion of the lithium salt to suppress generation of HF due to the decomposition of the lithium salt, the 1,4-dicyano-2-butene (DCB) may further improve high-temperature storage characteristics of the secondary battery.

The 1,4-dicyano-2-butene (DCB) may be included in an amount of 0.5 wt% to 3 wt%, particularly 1.0 wt% to 2.5 wt%, and more particularly 1.0 wt% to 2.0 wt% based on a total weight of the non-aqueous electrolyte solution for a lithium secondary battery.

In a case in which the 1,4-dicyano-2-butene (DCB) is included in an amount within the above range, a stable film may be formed on the surface of the positive electrode to obtain a high effect of suppressing metal ion dissolution from the positive electrode, and a stable film may be formed on the surfaces of the negative electrode and the positive electrode to obtain a high effect of suppressing the gas generation due to the side reaction between the positive electrode and the electrolyte solution and the resulting cell swelling. Thus, the battery stability during high-temperature storage, the cell swelling, and the capacity characteristics may be further improved.

If the amount of the 1,4-dicyano-2-butene (DCB) is greater than 3.0 wt%, the cell swelling suppression effect is significantly improved, but the capacity characteristics and the cycle characteristics may be degraded while mobility of ions in the battery is reduced due to an increase in viscosity of the electrolyte solution caused by the surplus compound. Also, if the amount of the 1,4-dicyano-2-butene (DCB) is less than 0.5 wt%, metallic foreign matter in the battery may be removed, but, since it is difficult to continuously maintain its effect, the metallic foreign matter removal effect and the gas generation suppression effect may be reduced over time.

Also, since the compound represented by Formula 1 has both fluorine and a nitrile group having a high dipole moment at both ends, it may not only form a film effective at high voltage, such as LiF, through a reduction reaction, but also it may easily bond with metallic foreign matters incorporated from raw materials or during a preparation process, metal cations on the surface of the positive electrode, or metal cations dissolved from the positive electrode during high-temperature storage due to a strong electrostatic interaction with the metal cations by the nitrile group on the surface of the positive electrode. Thus, since the dissolution of the metal ions may be effectively suppressed by forming a stable film on the surface of the positive electrode by binding with the metal ions and, furthermore, electrodeposition or precipitation of the dissolved metal ions on the surface of the negative electrode may be prevented, the side reaction due to the transition metal and the gas generation may be suppressed.

In Formula 1, R may be a substituted or unsubstituted alkylene group having 2 to 8 carbon atoms, and R₁, R₂, and R₃ may each independently be a halogen atom or a substituted or unsubstituted alkyl group having 1 to 3 carbon atoms.

Specifically, in Formula 1, R may be a substituted or unsubstituted alkylene group having 2 to 5 carbon atoms, R₁ and R₂ may each independently be a halogen atom or a substituted or unsubstituted alkyl group having 1 to 3 carbon atoms, and R₃ may be a halogen atom.

More specifically, the compound represented by Formula 1 may be a compound represented by Formula 1a below.

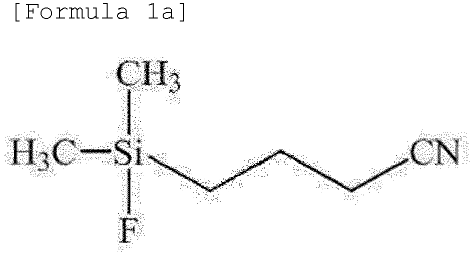

A mixing ratio of the 1,4-dicyano-2-butene (DCB) and the compound represented by Formula 1 may have an important effect on improving overall performance of the secondary battery.

Specifically, the 1,4-dicyano-2-butene (DCB) and the compound represented by Formula 1 may be included in a weight ratio of 1:0.1 to 1:0.5, for example, 1:0.2 to 1:0.4. In a case in which the 1,4-dicyano-2-butene (DCB) and the compound represented by Formula 1 are included in amounts within the above range, since a stable film is formed at a high voltage of 4.45 V or more and during storage at a high temperature of 60°C or more, the metal dissolution from the positive electrode may be suppressed and the side reaction between the positive electrode and the electrolyte solution may be prevented, and thus, the gas generation caused by the side reaction between the positive electrode and the electrolyte solution and the cell swelling may be suppressed. Thus, the high-temperature storage stability may be improved. Furthermore, the transition metal dissolution suppression effect and the cycle characteristics and capacity characteristics of the secondary battery may be sufficiently improved while suppressing a decrease in capacity and an increase in resistance due to the side reaction as much as possible.

In a case in which the weight ratio of the compound represented by Formula 1 to the 1,4-dicyano-2-butene is less than 0.1, since it is difficult to form a stable film on the surface of the electrode, the effect of suppressing the side reaction and the transition metal dissolution may be reduced. Thus, the battery capacity may be reduced, and the cycle characteristics may be degraded. In contrast, in a case in which the weight ratio of the compound represented by Formula 1 to the 1,4-dicyano-2-butene is greater than 0.5, since a film with high resistance is formed on the surface of the electrode, the lithium mobility may be reduced to degrade the cycle characteristics.

The compound represented by Formula 1 may be included in an amount of less than 2.0 wt%, particularly 0.1 wt% or more to less than 2.0 wt%, and more particularly 0.1 wt% to 1.9 wt%, for example, 0.3 wt% to 1.7 wt% based on the total weight of the non-aqueous electrolyte solution for a lithium secondary battery.

In a case in which the compound represented by Formula 1 is included in an amount within the above range, since a stable film is formed during high-temperature storage, the metal dissolution from the positive electrode is suppressed and the side reaction between the positive electrode and the electrolyte solution is prevented, and thus, the gas generation caused by the side reaction between the positive electrode and the electrolyte solution and the cell swelling may be suppressed. In a case in which the compound represented by Formula 1 is included in an amount of 2.0 wt% or more, since an additional side reaction of the solvent occurs due to a by-product formed by self-decomposition and an excessive increase in film resistance, the gas generation may be increased to degrade the cell swelling suppression effect.

In order to further improve the positive electrode protection and dissolution suppression effect, the non-aqueous electrolyte solution for a lithium secondary battery of the present invention may further include 1,3,6-hexane tricarbonitrile (HTCN) as the additive.

The 1,3,6-hexane tricarbonitrile is a compound having an asymmetric structure while containing three or more nitrile groups (-CN), wherein it has a very high binding energy with the metal ions in the battery and, accordingly, it may form a stable and solid bond with the metal ions. Thus, since a change in thickness of the battery may be significantly reduced during the high-temperature storage and when a thermal shock is applied, thermal shock durability may be improved. Also, since the 1,3,6-hexane tricarbonitrile has a very strong binding force with a surface of a positive electrode active material, a protective layer having a strong binding force on a surface of a positive electrode active material layer may be formed. Accordingly, since a direct contact between the positive electrode and the electrolyte may be effectively prevented, the decomposition of the electrolyte in the positive electrode is suppressed even if the battery is stored at high temperature and is continuously charged and discharged, and thus, the gas generation and the resulting battery swelling may be effectively improved.

The 1,3,6-hexane tricarbonitrile may be included in an amount of 10 parts by weight or less based on 1 part by weight of the 1,4-dicyano-2-butene (DCB), and may be included in an amount of maximum of 3 wt% or less, for example, 0.1 wt% to 3 wt% based on the total weight of the non-aqueous electrolyte solution.

In a case in which the amount of the 1,3,6-hexane tricarbonitrile included is within the maximum of 3 wt%, the non-aqueous electrolyte solution may improve high-temperature storage and life characteristics by effectively suppressing the gas generation under high-voltage and high-temperature conditions. In a case in which the amount of the 1,3,6-hexane tricarbonitrile is greater than 3 wt% or the 1,3,6-hexane tricarbonitrile is included in an amount of greater than 10 parts by weight based on 1 part by weight of the 1,4-dicyano-2-butene (DCB), since the film resistance is increased as a thick film is formed on the surface of the electrode, the life characteristics or storage capacity of the battery may rather be degraded.

### (4) Additive for Forming SEI

The non-aqueous electrolyte solution for a lithium secondary battery of the present invention may further include additives for forming an SEI in the non-aqueous electrolyte solution, if necessary, in order to prevent the occurrence of the collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperature.

As a representative example, the additive for forming an SEI may include at least one additive for forming an SEI which is selected from the group consisting of a cyclic carbonate-based compound, a halogen-substituted carbonate-based compound, a sultone-based compound, a sulfate-based compound, a phosphate-based compound, a borate-based compound, a nitrile-based compound other than decanenitrile and 1,4-dicyano-2-butene, a benzene-based compound, an amine-based compound, a silane-based compound, and a lithium salt-based compound.

The cyclic carbonate-based compound may include vinylene carbonate (VC) or vinyl ethylene carbonate (VEC), and may be included in an amount of 3 wt% or less based on the total weight of the non-aqueous electrolyte solution. In a case in which the amount of the cyclic carbonate-based compound in the electrolyte solution is greater than 3 wt%, cell swelling inhibition performance may be degraded.

The halogen-substituted carbonate-based compound may include fluoroethylene carbonate (FEC), and may be included in an amount of 5 wt% or less based on a total weight of the electrolyte. In a case in which the amount of the halogen-substituted carbonate-based compound in the electrolyte is greater than 5 wt%, the cell swelling inhibition performance may be degraded.

The sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sultone-based compound may be included in an amount of 0.3 wt% to 5 wt%, for example, 1 wt% to 5 wt% based on the total weight of the non-aqueous electrolyte solution. In a case in which the amount of the sultone-based compound in the electrolyte solution is greater than 5 wt%, an increase in resistance and a degradation of output may occur due to the formation of an excessively thick film on the surface of the electrode, and the resistance may be increased due to the excessive amount of the additive in the electrolyte to degrade output characteristics.

The sulfate-based compound may include ethylene sulfate (Esa), trimethylene sulfate (TMS), or methyl trimethylene sulfate (MTMS), and may be included in an amount of 5 wt% or less based on the total weight of the electrolyte.

The phosphate-based compound may include at least one compound selected from the group consisting of lithium difluoro bis(oxalato)phosphate, lithium difluorophosphate, tetramethyl trimethylsilyl phosphate, trimethylsilyl phosphite, tris(2,2,2-trifluoroethyl)phosphate, and tris(2,2,2-trifluoroethyl)phosphite, and may be included in an amount of 5 wt% or less based on the total weight of the electrolyte.

The borate-based compound may include tetraphenylborate, lithium difluoro(oxalato)borate (LiODFB), or LiBOB (lithium bis(oxalato)borate (LiB(C₂O₄)₂)), and may be included in an amount of 5 wt% or less based on the total weight of the electrolyte.

The nitrile-based compound is a nitrile-based compound other than 1,4-dicyano-2-butene (DCB), the compound represented by Formula 1, or 1,3,6-hexane tricarbonitrile, wherein typical examples thereof may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The nitrile-based compound may be included in an amount of 5 wt% to 8 wt%, for example, 6 wt% to 8 wt% based on the total weight of the non-aqueous electrolyte solution. In a case in which the amount of the nitrile-based compound in the electrolyte solution is greater than 8 wt%, since the resistance is increased due to an increase in the film formed on the surface of the electrode, battery performance may be degraded.

The benzene-based compound may include monofluorobenzene, difluorobenzene, or trifluorobenzene, the amine-based compound may include triethanolamine or ethylenediamine, and the silane-based compound may include tetravinylsilane.

The lithium salt-based compound is a compound different from the lithium salt included in the non-aqueous electrolyte solution, wherein the lithium salt-based compound may include LiPO₂F₂ or LiBF₄, and may be included in an amount of 5 wt% or less based on the total weight of the electrolyte.

In a case in which vinylene carbonate, vinylethylene carbonate, or succinonitrile, among these additives for forming an SEI, is further included, a more robust SEI may be formed on the surface of the negative electrode during an initial activation process of the secondary battery.

In a case in which the LiBF₄ is included, high-temperature stability of the secondary battery may be improved by suppressing the generation of gas which may be generated due to the decomposition of the electrolyte solution at high temperature.

Two or more additives for forming an SEI may be mixed and used, and the additive for forming an SEI may be included in an amount of 0.01 wt% to 50 wt%, particularly, 0.01 wt% to 10 wt%, and preferably 0.05 wt% to 5 wt% based on the total weight of the electrolyte solution. If the amount of the additive for forming an SEI is less than 0.01 wt%, an effect of improving low-temperature output, high-temperature storage characteristics, and high-temperature life characteristics of the battery is insignificant, and, if the amount of the additive for forming an SEI is greater than 50 wt%, the side reaction in the electrolyte solution may excessively occur during charge and discharge of the battery. Particularly, if the excessive amount of the additives for forming an SEI is added, the additives for forming an SEI may not be sufficiently decomposed at high temperature so that they may be present in the form of an unreacted material or precipitates in the electrolyte solution at room temperature. Accordingly, a side reaction that degrades life or resistance characteristics of the secondary battery may occur.

### Lithium Secondary Battery

In another embodiment of the present invention, there is provided a lithium secondary battery including the non-aqueous electrolyte solution for a lithium secondary battery of the present invention.

After an electrode assembly, in which a positive electrode, a negative electrode, and a separator between the positive electrode and the negative electrode are sequentially stacked, is formed and accommodated in a battery case, the lithium secondary battery of the present invention may be prepared by injecting the non-aqueous electrolyte solution of the present invention.

The positive electrode, the negative electrode, and the separator, which are included in the lithium secondary battery of the present invention, may be prepared according to a conventional method known in the art and used, and are specifically the same as those described later.

### (1) Positive Electrode

The positive electrode may be prepared by coating a positive electrode collector with a positive electrode slurry including a positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum.

More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2)), lithium-nickel-cobalt-based oxide (e.g., LiNi_{1-Y1}Co_{Y1}O₂ (where 0<Y1<1)), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2)), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and S 2 are atomic fractions of each independent elements, wherein 0<p2<1, 0<q2<1, 0<r3<1, 0<S2<1, and p2+q2+r3+S2=1), and any one thereof or a compound of two or more thereof may be included. Among these materials, in terms of the improvement of cycle characteristics and stability of the battery, the lithium composite metal oxide may include LiCoO₂, LiMnO₂, LiNiO₂, lithium nickel manganese cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂), or lithium nickel cobalt aluminum oxide (e.g., LiNi_{0.8}Co_{0.15}Al_{0.05}O₂, etc.), and, in consideration of a significant improvement due to the control of type and content ratio of elements constituting the lithium composite metal oxide, the lithium composite metal oxide may include Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

The positive electrode active material may be included in an amount of 80 wt% to 99 wt%, for example, 90 wt% to 99 wt% based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder is commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, a styrene-butadiene rubber, a fluoro rubber, various copolymers, and the like.

Also, the conductive agent is a material providing conductivity without causing adverse chemical changes in the battery, wherein it may be added in an amount of 1 wt% to 20 wt% based on the total weight of the solid content in the positive electrode slurry.

As a typical example of the conductive agent, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

Furthermore, the solvent may include an organic solvent, such as N-methyl-2-pyrrolidone (NMP), and may be used in an amount such that desirable viscosity is obtained when the positive electrode active material as well as selectively the binder and the conductive agent are included. For example, the solvent may be included in an amount such that a concentration of the solid content in the slurry including the positive electrode active material as well as selectively the binder and the conductive agent is in a range of 10 wt% to 60 wt%, for example, 20 wt% to 50 wt%.

### (2) Negative Electrode

The negative electrode may be prepared by coating a negative electrode collector with a negative electrode slurry including a negative electrode active material, a binder, a conductive agent, and a solvent, and then drying and rolling the coated negative electrode collector.

The negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤ x≤ 1), LiₓWO₂ (0≤ x≤ 1), and SnₓMe₁₋ₓMe'_{y}O_{z} (Me: manganese (Mn), Fe, Pb, or Ge; Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), sulfur (S), selenium (Se), tellurium (Te), polonium (Po), and a combination thereof.

The transition metal oxide may include lithium-containing titanium composite oxide (LTO), vanadium oxide, and lithium vanadium oxide.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, a styrene-butadiene rubber, a fluoro rubber, and various copolymers thereof.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The solvent may include water or an organic solvent, such as NMP and alcohol, and may be used in an amount such that desirable viscosity is obtained when the negative electrode active material as well as selectively the binder and the conductive agent are included. For example, the solvent may be included in an amount such that a concentration of the solid content in the negative electrode slurry including the negative electrode active material as well as selectively the binder and the conductive agent is in a range of 50 wt% to 75 wt%, for example, 50 wt% to 65 wt%.

### (3) Separator

A typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator included in the lithium secondary battery of the present invention, and a typical porous nonwoven fabric, for example, a nonwoven fabric formed of high melting point glass fibers or polyethylene terephthalate fibers may be used, but the present invention is not limited thereto.

A shape of the lithium secondary battery of the present invention is not particularly limited, but a cylindrical type using a can, a prismatic type, a pouch type, or a coin type may be used.

Hereinafter, the present invention will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

### (Preparation of Non-aqueous Electrolyte Solution for Lithium Secondary Battery)

An electrolyte solution (A) was prepared by mixing ethylene carbonate (EC), propylene carbonate (PC), ethyl propionate (EP), and propyl propionate (PP) in a volume ratio of 2:1:2.5:4.5, and dissolving LiPF₆ such that a concentration of the LiPF₆ was 1.2 M. A non-aqueous electrolyte solution (B-1) for a lithium secondary battery of the present invention was prepared by adding 1 g of 1,4-dicyano-2-butene (DCB), 0.1 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 86.9 g of the electrolyte solution (A).

### (Lithium Secondary Battery Preparation)

A positive electrode active material (LiCoO₂), a conductive agent (carbon black), and a binder (polyvinylidene fluoride) were added to N-methyl-2-pyrrolidone (NMP) in a weight ratio of 97.5:1:1.5 to prepare a positive electrode slurry (solid content: 50 wt%). A 12 µm thick aluminum (Al) thin film, as a positive electrode collector, was coated with the positive electrode slurry, dried, and then roll-pressed to prepare a positive electrode.

A negative electrode active material (graphite), a binder (SBR-CMC), and a conductive agent (carbon black) were added to water, as a solvent, in a weight ratio of 95:3.5:1.5 to prepare a negative electrode slurry (solid content: 60 wt%). A 6 µm thick copper (Cu) thin film, as a negative electrode collector, was coated with the negative electrode slurry, dried, and then roll-pressed to prepare a negative electrode.

An electrode assembly was prepared by sequentially stacking the positive electrode, a polyolefin-based porous separator coated with inorganic particles (Al₂O₃), and the negative electrode.

The electrode assembly was accommodated in a pouch-type battery case, and the non-aqueous electrolyte solution for a lithium secondary battery was injected thereinto to prepare a pouch-type lithium secondary battery.

### Example 2.

A non-aqueous electrolyte solution (B-2) for a lithium secondary battery was prepared by adding 3 g of 1,4-dicyano-2-butene (DCB), 0.3 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 84.7 g of the electrolyte solution (A). Then, a lithium secondary battery was prepared in the same manner as in Example 1 except that the above-prepared non-aqueous electrolyte solution (B-2) for a lithium secondary battery, instead of the non-aqueous electrolyte solution (B-1) for a lithium secondary battery, was used.

### Example 3.

A non-aqueous electrolyte solution (B-3) for a lithium secondary battery was prepared by adding 1 g of 1,4-dicyano-2-butene (DCB), 0.5 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 86.5 g of the electrolyte solution (A). Then, a lithium secondary battery was prepared in the same manner as in Example 1 except that the above-prepared non-aqueous electrolyte solution (B-3) for a lithium secondary battery, instead of the non-aqueous electrolyte solution (B-1) for a lithium secondary battery, was used.

### Example 4.

A non-aqueous electrolyte solution (B-4) for a lithium secondary battery was prepared by adding 3 g of 1,4-dicyano-2-butene (DCB), 1.5 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 83.5 g of the electrolyte solution (A). Then, a lithium secondary battery was prepared in the same manner as in Example 1 except that the above-prepared non-aqueous electrolyte solution (B-4) for a lithium secondary battery, instead of the non-aqueous electrolyte solution (B-1) for a lithium secondary battery, was used.

### Example 5.

A non-aqueous electrolyte solution (B-5) for a lithium secondary battery was prepared by adding 1 g of 1,4-dicyano-2-butene (DCB), 0.1 g of the compound of Formula 1a, 3 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 83.9 g of the electrolyte solution (A). Then, a lithium secondary battery was prepared in the same manner as in Example 1 except that the above-prepared non-aqueous electrolyte solution (B-5) for a lithium secondary battery, instead of the non-aqueous electrolyte solution (B-1) for a lithium secondary battery, was used.

### Example 6.

A non-aqueous electrolyte solution (B-6) for a lithium secondary battery was prepared by adding 3 g of 1,4-dicyano-2-butene (DCB), 0.3 g of the compound of Formula 1a, 3 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 81.7 g of the electrolyte solution (A). Then, a lithium secondary battery was prepared in the same manner as in Example 1 except that the above-prepared non-aqueous electrolyte solution (B-6) for a lithium secondary battery, instead of the non-aqueous electrolyte solution (B-1) for a lithium secondary battery, was used.

### Example 7.

A non-aqueous electrolyte solution (B-7) for a lithium secondary battery was prepared by adding 1 g of 1,4-dicyano-2-butene (DCB), 0.5 g of the compound of Formula 1a, 3 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 83.5 g of the electrolyte solution (A). Then, a lithium secondary battery was prepared in the same manner as in Example 1 except that the above-prepared non-aqueous electrolyte solution (B-7) for a lithium secondary battery, instead of the non-aqueous electrolyte solution (B-1) for a lithium secondary battery, was used.

### Example 8.

A non-aqueous electrolyte solution (B-8) for a lithium secondary battery was prepared by adding 3 g of 1,4-dicyano-2-butene (DCB), 1.5 g of the compound of Formula 1a, 3 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 80.5 g of the electrolyte solution (A). Then, a lithium secondary battery was prepared in the same manner as in Example 1 except that the above-prepared non-aqueous electrolyte solution (B-8) for a lithium secondary battery, instead of the non-aqueous electrolyte solution (B-1) for a lithium secondary battery, was used.

### Example 9.

A non-aqueous electrolyte solution (B-9) for a lithium secondary battery was prepared by adding 1 g of 1,4-dicyano-2-butene (DCB), 0.05 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 86.95 g of the electrolyte solution (A). Then, a lithium secondary battery was prepared in the same manner as in Example 1 except that the above-prepared non-aqueous electrolyte solution (B-9) for a lithium secondary battery, instead of the non-aqueous electrolyte solution (B-1) for a lithium secondary battery, was used.

### Example 10.

A non-aqueous electrolyte solution (B-10) for a lithium secondary battery was prepared by adding 3 g of 1,4-dicyano-2-butene (DCB), 0.05 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 84.95 g of the electrolyte solution (A). Then, a lithium secondary battery was prepared in the same manner as in Example 1 except that the above-prepared non-aqueous electrolyte solution (B-10) for a lithium secondary battery, instead of the non-aqueous electrolyte solution (B-1) for a lithium secondary battery, was used.

### Example 11.

A non-aqueous electrolyte solution (B-11) for a lithium secondary battery was prepared by adding 1 g of 1,4-dicyano-2-butene (DCB), 1 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 86 g of the electrolyte solution (A). Then, a lithium secondary battery was prepared in the same manner as in Example 1 except that the above-prepared non-aqueous electrolyte solution (B-11) for a lithium secondary battery, instead of the non-aqueous electrolyte solution (B-1) for a lithium secondary battery, was used.

### Example 12.

A non-aqueous electrolyte solution (B-12) for a lithium secondary battery was prepared by adding 3 g of 1,4-dicyano-2-butene (DCB), 3 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 82 g of the electrolyte solution (A). Then, a lithium secondary battery was prepared in the same manner as in Example 1 except that the above-prepared non-aqueous electrolyte solution (B-12) for a lithium secondary battery, instead of the non-aqueous electrolyte solution (B-1) for a lithium secondary battery, was used.

### Example 13.

A non-aqueous electrolyte solution (B-13) for a lithium secondary battery was prepared by adding 4 g of 1,4-dicyano-2-butene (DCB), 0.4 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 83.6 g of the electrolyte solution (A). Then, a lithium secondary battery was prepared in the same manner as in Example 1 except that the above-prepared non-aqueous electrolyte solution (B-13) for a lithium secondary battery, instead of the non-aqueous electrolyte solution (B-1) for a lithium secondary battery, was used.

### Example 14.

A non-aqueous electrolyte solution (B-14) for a lithium secondary battery was prepared by adding 4 g of 1,4-dicyano-2-butene (DCB), 2 g of the compound of Formula 1a, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 82 g of the electrolyte solution (A). Then, a lithium secondary battery was prepared in the same manner as in Example 1 except that the above-prepared non-aqueous electrolyte solution (B-14) for a lithium secondary battery, instead of the non-aqueous electrolyte solution (B-1) for a lithium secondary battery, was used.

### Example 15.

A non-aqueous electrolyte solution (B-15) for a lithium secondary battery was prepared by adding 1 g of 1,4-dicyano-2-butene (DCB), 0.5 g of the compound of Formula 1a, 4 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 82.5 g of the electrolyte solution (A). Then, a lithium secondary battery was prepared in the same manner as in Example 1 except that the above-prepared non-aqueous electrolyte solution (B-15) for a lithium secondary battery, instead of the non-aqueous electrolyte solution (B-1) for a lithium secondary battery, was used.

### Comparative Example 1.

A non-aqueous electrolyte solution (C-1) for a lithium secondary battery was prepared by adding 1 g of the compound of Formula 1a, 1 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 86 g of the electrolyte solution (A). Then, a lithium secondary battery was prepared in the same manner as in Example 1 except that the above-prepared non-aqueous electrolyte solution (C-1) for a lithium secondary battery, instead of the non-aqueous electrolyte solution (B-1) for a lithium secondary battery, was used.

### Comparative Example 2.

A non-aqueous electrolyte solution (C-2) for a lithium secondary battery was prepared by adding 1 g of succinonitrile (SN), 0.5 g of the compound of Formula 1a, 4 g of 1,3,6-hexane tricarbonitrile, and 0.5 g of vinyl ethylene carbonate (VEC), 4 g of 1,3-propane sultone (PS), 7 g of fluoroethylene carbonate (FEC), and 0.5 g of lithium difluoro(oxalato)borate (LiODFB), as an additive for forming an SEI, to 82.5 g of the electrolyte solution (A). Then, a lithium secondary battery was prepared in the same manner as in Example 1 except that the above-prepared non-aqueous electrolyte solution (C-2) for a lithium secondary battery, instead of the non-aqueous electrolyte solution (B-1) for a lithium secondary battery, was used.

In Table 1 below, the abbreviation of each compound has the following meaning.
DCB: 1,4-dicyano-2-butene
HTCN: 1,3,6-hexane tricarbonitrile
SN: succinonitrile

**[Table 1]**

| | Non-aqueous organic solvent amount (g) | Nitrile-based compound | | | | Amount of the additive for forming SEI (g) |
|---|---|---|---|---|---|---|
| | | DCB amount (g) | Amount of the compound of Formula 1a (g) | HTCN amount (g) | SN amount (g) | |
| Example 1(B-1) | 86.9 | 1 | 0.1 | - | - | 12 |
| Example 2(B-2) | 84.7 | 3 | 0.3 | - | - | 12 |
| Example 3(B-3) | 86.5 | 1 | 0.5 | - | - | 12 |
| Example 4(B-4) | 83.5 | 3 | 1.5 | - | - | 12 |
| Example 5(B-5) | 83.9 | 1 | 0.1 | 3 | - | 12 |
| Example 6(B-6) | 81.7 | 3 | 0.3 | 3 | - | 12 |
| Example 7(B-7) | 83.5 | 1 | 0.5 | 3 | - | 12 |
| Example 8(B-8) | 80.5 | 3 | 1.5 | 3 | - | 12 |
| Example 9(B-9) | 86.95 | 1 | 0.05 | - | - | 12 |
| Example 10(B-10) | 84.95 | 3 | 0.05 | - | - | 12 |
| Example 11(B-11) | 86 | 1 | 1 | - | - | 12 |
| Example 12(B-12) | 82 | 3 | 3 | - | - | 12 |
| Example 13(B-13) | 83.6 | 4 | 0.4 | - | - | 12 |
| Example 14(B-14) | 82 | 4 | 2 | - | - | 12 |
| Example 15(B-15) | 82.5 | 1 | 0.5 | 4 | - | 12 |
| Comparative Example 1(C-1) | 86 | - | 1 | 1 | - | 12 |
| Comparative Example 2(C-2) | 82.5 | - | 0.5 | 4 | 1 | 12 |

### Experimental Examples

### Experimental Example 1. Evaluation of Thickness Increase Rate After High-temperature Storage

After an activation (formation) process was performed at 0.2 C rate on the lithium secondary batteries prepared in Examples 1 to 15 and Comparative Examples 1 and 2, gas in each battery was removed through a degassing process.

3 cycles of an initial charge and discharge process, in which charging of each lithium secondary battery having gas removed therefrom at 0.2 C rate to 4.45 V under a constant current/constant voltage condition at room temperature (25°C), cut-off charging at 0.05 C, and discharging at 0.2 C rate to 3.0 V were set as one cycle, were performed using charge/discharge equipment. In this case, PNE-0506 charge/discharge equipment (manufacturer: PNE SOLUTION Co., Ltd.) was used as the charge/discharge equipment used for the charging and discharging of the battery.

Subsequently, after each lithium secondary battery was constant current/constant voltage charged at 0.7 C rate to 4.45 V and cut-off charged at 0.05 C in the charge/discharge equipment at room temperature (25°C), a thickness before high-temperature storage of each lithium secondary battery was measured with a plate thickness gauge with a weight of 300 g, and the results thereof are presented in Table 2 below. In this case, a method of measuring the thickness was performed in such a manner that each battery was put on the plate thickness gauge and a value appearing when the weight of 300 g was put on the battery was checked.

Subsequently, after each of the lithium secondary batteries was stored at high temperature by being left standing in an oven (OF-02GW, manufactured by JEIO TECH. CO., LTD.) at 85°C for 8 hours, each battery was taken out at room temperature and cooled for 24 hours, a thickness of each battery after high-temperature storage was then measured using the plate thickness gauge, and the results thereof are presented in Table 2 below.

Next, a thickness increase rate (%) of the battery after the high-temperature storage relative to the thickness of the battery before the high-temperature storage was calculated, and the results thereof are presented in Table 2 below.

**[Table 2]**

| | Thickness before high-temperature storage (mm) | Thickness after high-temperature storage (mm) | Thickness increase rate (%) |
|---|---|---|---|
| Example 1 | 3.25 | 3.44 | 5.9 |
| Example 2 | 3.24 | 3.39 | 4.6 |
| Example 3 | 3.24 | 3.41 | 5.3 |
| Example 4 | 3.23 | 3.40 | 5.3 |
| Example 5 | 3.23 | 3.39 | 5.0 |
| Example 6 | 3.22 | 3.34 | 3.7 |
| Example 7 | 3.23 | 3.36 | 4.0 |
| Example 8 | 3.21 | 3.32 | 3.4 |
| Example 9 | 3.26 | 3.52 | 8.0 |
| Example 10 | 3.25 | 3.49 | 7.4 |
| Example 11 | 3.24 | 3.44 | 6.2 |
| Example 12 | 3.27 | 3.58 | 9.5 |
| Example 13 | 3.24 | 3.42 | 5.6 |
| Example 14 | 3.25 | 3.55 | 9.2 |
| Example 15 | 3.23 | 3.40 | 5.3 |
| Comparative Example 1 | 3.28 | 3.82 | 16.5 |
| Comparative Example 2 | 3.27 | 3.69 | 12.8 |

As illustrated in Table 2, with respect to the secondary batteries of Examples 1 to 8, it may be understood that thickness increase rates after high-temperature storage were about 5.9% or less.

In contrast, with respect to the secondary batteries of Comparative Examples 1 and 2 including the non-aqueous electrolyte solution that did not contain the 1,4-dicyano-2-butene (DCB) and the compound of Formula 1a together, it may be understood that thickness increase rates were significantly increased in comparison to those of the secondary batteries of Examples 1 to 8.

That is, with respect to the secondary battery of Comparative Example 1 including the non-aqueous electrolyte solution that did not contain the 1,4-dicyano-2-butene as an additive, since it was difficult to form a stable film on the surface of the positive electrode, the positive electrode was not completely protected, and thus, it may be confirmed that the thickness increase rate during high-temperature storage was increased in comparison to those of Examples 1 to 8. Also, with respect to the secondary battery of Comparative Example 2 including the non-aqueous electrolyte solution that contained succinonitrile, as a conventional nitrile-based additive, instead of the 1,4-dicyano-2-butene, since a binding force with the transition metal on the surface of the positive electrode was weaker than that of the 1,4-dicyano-2-butene, the protection of the positive electrode was somewhat weak, and thus, it may be confirmed that the thickness increase rate was higher than those of Examples 1 to 8.

With respect to the secondary batteries of Examples 9 and 10, since an effect of forming a film on the surface of the positive electrode was insignificant as the compound represented by Formula 1a was used less than the appropriate amount, it may be confirmed that thickness increase rates were increased in comparison to those of the secondary batteries of Examples 1 to 8.

Also, with respect to the secondary batteries of Examples 11 and 12, since gas generated by self-decomposition was increased as the amount of the compound represented by Formula 1a with respect to the amount of the 1,4-dicyano-2-butene exceeded the appropriate amount, it may be confirmed that thickness increase rates were increased in comparison to those of the secondary batteries of Examples 1 to 8.

Furthermore, with respect to the secondary battery of Example 14, since gas generated by self-decomposition was increased as the compound represented by Formula 1a as well as the 1,4-dicyano-2-butene was excessively included, it may be confirmed that a thickness increase rate was increased in comparison to those of the secondary batteries of Examples 1 to 8, 13, and 15.

Particularly, with respect to the secondary batteries of Examples 12 and 14 in which the compound represented by Formula 1a was included in an amount of 2% or more, it may be understood that thickness increase rates were relatively increased because a by-product formed by the self-decomposition of the compound represented by Formula 1a and an additional side reaction of the solvent caused by an excessive increase in film resistance occurred.

With respect to the secondary battery of Example 13, since the amount of the 1,4-dicyano-2-butene exceeded a critical range as in Example 14, but a relatively small amount of the compound represented by Formula 1a was included, the side reaction during high-temperature storage was reduced to suppress gas generation, it may be understood that a thickness increase rate was excellent at 5.6%.

Also, with respect to the secondary battery of Example 15, the amounts of the 1,4-dicyano-2-butene and the compound represented by Formula 1a were the same as those of Examples 3 and 7, but, since the amount of the 1,3,6-hexane tricarbonitrile was increased, it may be understood that a thickness increase rate was excellent at 5.3%.

That is, since a gas generation rate due to the self-decomposition of the 1,4-dicyano-2-butene or the 1,3,6-hexane tricarbonitrile was lower than that of the compound represented by Formula 1a, it may be confirmed that the thickness increase rate was not significantly increased even if an excessive amount was included.

### Experimental Example 2. Capacity Retention Evaluation

After an activation (formation) process was performed at 0.2 C rate on the lithium secondary batteries prepared in Examples 1 to 15 and Comparative Examples 1 and 2, gas in each battery was removed through a degassing process.

3 cycles of an initial charge and discharge process, in which charging of each lithium secondary battery having gas removed therefrom at 0.2 C rate to 4.45 V under a constant current/constant voltage condition at room temperature (25°C), cut-off charging at 0.05 C, and discharging at 0.2 C rate to 3.0 V were set as one cycle, were performed using charge/discharge equipment. In this case, PNE-0506 charge/discharge equipment (manufacturer: PNE SOLUTION Co., Ltd.) was used as the charge/discharge equipment used for the charging and discharging of the battery.

Subsequently, 200 cycles of a charge and discharge process, in which charging of each lithium secondary battery at 1.0 C rate to 4.45 V under a constant current/constant voltage condition at room temperature (25°C), cut-off charging at 0.05 C, and cut-off discharging at a constant current of 1.0 C rate to 3.0 V were set as one cycle, were performed using the charge/discharge equipment.

Subsequently, discharge capacity after 200 cycles was measured and the results thereof are presented in Table 3 below.

Next, capacity retention, in which the measured discharge capacity was expressed as a percentage (%) relative to theoretical design capacity (2210 mAh) of the corresponding cell, was listed in Table 3 below.

**[Table 3]**

| | Discharge capacity (mAh) after 200 cycles | Capacity retention (%) |
|---|---|---|
| Example 1 | 2140.7 | 96.9 |
| Example 2 | 2128.6 | 96.3 |
| Example 3 | 2186.5 | 98.9 |
| Example 4 | 2115.5 | 95.7 |
| Example 5 | 2158.7 | 97.7 |
| Example 6 | 2120.4 | 95.9 |
| Example 7 | 2166.2 | 98.0 |
| Example 8 | 2111.3 | 95.5 |
| Example 9 | 2082.2 | 94.2 |
| Example 10 | 2069.3 | 93.6 |
| Example 11 | 2077.6 | 94.0 |
| Example 12 | 2031.6 | 91.9 |
| Example 13 | 2055.7 | 93.0 |
| Example 14 | 2040.8 | 92.3 |
| Example 15 | 2066.6 | 93.5 |
| Comparative Example 1 | 1984.5 | 89.8 |
| Comparative Example 2 | 2018.7 | 91.3 |

As illustrated in Table 3, with respect to the secondary batteries of Examples 1 to 8, it may be understood that capacity retentions after 200 cycles were high, mostly at about 95.5% or more.

In contrast, with respect to the secondary batteries of Comparative Examples 1 and 2 including the non-aqueous electrolyte solution that did not contain the 1,4-dicyano-2-butene (DCB) and the compound of Formula 1a together, it may be understood that discharge capacity retentions after 200 cycles were significantly reduced in comparison to those of the secondary batteries of Examples 1 to 8.

That is, with respect to the secondary battery of Comparative Example 1 including the non-aqueous electrolyte solution that did not contain the 1,4-dicyano-2-butene as an additive and the secondary battery of Comparative Example 2 including the non-aqueous electrolyte solution that contained succinonitrile, as a conventional nitrile-based additive, instead of the 1,4-dicyano-2-butene, since the positive electrode protection and transition metal dissolution suppression effect were insignificant, it may be understood that cycle capacity characteristics were degraded in comparison to those of Examples 1 to 8 while transition metal ions generated from the positive electrode were electrodeposited or reduced on the surface of the negative electrode during cycle life.

With respect to the secondary batteries of Examples 9 and 10, since the effect of forming a film on the surface of the positive electrode was insignificant as the compound represented by Formula 1a was used less than the appropriate amount, it may be confirmed that discharge capacity retentions after 200 cycles were relatively reduced in comparison to those of the secondary batteries of Examples 1 to 8.

Also, with respect to the secondary batteries of Examples 11 and 12, since an increase in the side reaction occurred as the amount of the compound represented by Formula 1a included was greater than the appropriate amount, it may be understood that discharge capacity retentions after 200 cycles were relatively reduced in comparison to those of the secondary batteries of Examples 1 to 8. Furthermore, with respect to the secondary batteries of Examples 13 to 15, since the side reaction was increased as the 1,4-dicyano-2-butene, the compound represented by Formula 1a, or the 1,3,6-hexane tricarbonitrile was excessively used, it may be understood that discharge capacity retentions after 200 cycles were relatively reduced in comparison to those of the secondary batteries of Examples 1 to 8.

## Claims

1. A non-aqueous electrolyte solution for a lithium secondary battery, the non-aqueous electrolyte solution comprising a lithium salt, an organic solvent, and an additive,
wherein the additive comprises 1,4-dicyano-2-butene (DCB) and a compound represented by Formula 1.
[Formula 1]
N≡C-R-Si (R₁) (R₂)-R₃
wherein, in Formula 1,
R is a substituted or unsubstituted alkylene group having 1 to 10 carbon atoms, and
R₁, R₂, and R₃ are each independently a halogen atom or a substituted or unsubstituted alkyl group having 1 to 5 carbon atoms.

2. The non-aqueous electrolyte solution for a lithium secondary battery of claim 1, wherein the 1,4-dicyano-2-butene (DCB) is included in an amount of 0.5 wt% to 3 wt% based on a total weight of the non-aqueous electrolyte solution for a lithium secondary battery.

3. The non-aqueous electrolyte solution for a lithium secondary battery of claim 1, wherein, in Formula 1, R is a substituted or unsubstituted alkylene group having 2 to 8 carbon atoms, and R₁, R₂, and R₃ are each independently a halogen atom or a substituted or unsubstituted alkyl group having 1 to 3 carbon atoms.

4. The non-aqueous electrolyte solution for a lithium secondary battery of claim 1, wherein, in Formula 1, R is a substituted or unsubstituted alkylene group having 2 to 5 carbon atoms, R₁ and R₂ are each independently a halogen atom or a substituted or unsubstituted alkyl group having 1 to 3 carbon atoms, and R₃ is a halogen atom.

5. The non-aqueous electrolyte solution for a lithium secondary battery of claim 1, wherein the compound represented by Formula 1 is a compound represented by Formula 1a.

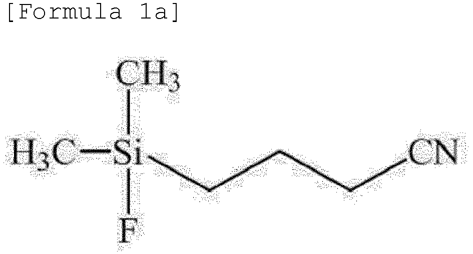

6. The non-aqueous electrolyte solution for a lithium secondary battery of claim 1, wherein a weight ratio of the 1,4-dicyano-2-butene (DCB) to the compound represented by Formula 1 is in a range of 1:0.1 to 1:0.5.

7. The non-aqueous electrolyte solution for a lithium secondary battery of claim 1, further comprising 1,3,6-hexane tricarbonitrile as the additive.

8. The non-aqueous electrolyte solution for a lithium secondary battery of claim 7, wherein the 1,3,6-hexane tricarbonitrile is included in an amount of 3 wt% or less based on a total weight of the non-aqueous electrolyte solution.

9. The non-aqueous electrolyte solution for a lithium secondary battery of claim 1, further comprising at least one additive for forming a solid electrolyte interphase (SEI) which is selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

10. A lithium secondary battery comprising:
a positive electrode including a positive electrode active material;
a negative electrode including a negative electrode active material;
a separator disposed between the negative electrode and the positive electrode; and
the non-aqueous electrolyte solution for a lithium secondary battery of claim 1.
